# EUROPEAN PATENT SPECIFICATION

(11) **EP 0 268 665 B1**
(45) Date of publication and mention of the grant of the patent: **13.01.1993**
(21) Application number: 87904088.9
(22) Date of filing: 11.06.1987
(51) Int. Cl.: C03C 27/12, B32B 17/06, H05B 3/26, H01C 17/14

(54) **TWO- OR MULTILAYER GLASS ELEMENT HAVING A PATTERN OF A METAL OR METAL COMPOUND COATING AND A PROCESS FOR THE PREPARATION THEREOF**
ZWEI- ODER MEHRSCHICHTIGES GLAS BAUTEIL MIT EINER BESCHICHTUNG AUS METALL ODER EINER METALLVERBINDUNG UND VERFAHREN ZU SEINER HERSTELLUNG
ELEMENT DE VERRE A DEUX COUCHES OU A COUCHES MULTIPLES PRESENTANT UNE CONFIGURATION DE REVETEMENT METALLIQUE OU DE REVETEMENT D'UN COMPOSE METALLIQUE ET PROCEDE DE PREPARATION DUDIT ELEMENT

(30) Priority: 11.06.1986 HU 246786; 12.11.1986 HU 246786
(43) Date of publication of application: 01.06.1988
(73) Proprietor: TATAR, Jenö, H-1126 Budapest (HU)
(72) Inventor: TATAR, Jenö, H-1121 Budapest (HU); KRAMER, Béla, H-1114 Budapest (HU)
(74) Representative: Gold, Tibor Z.
(86) International application number: HU8700024
(87) International publication number: WO8707594

(56) References cited:
- EP-A- 0 155 614
- DD-A- 86 689
- GB-A- 410 026
- US-A- 1 961 335
- US-A- 2 878 357

## Description

The invention relates to an article of furniture or architecture having aesthetic pattern, which is of high strength, is easy to clean and the decoration of which exhibits good resistance to surface scratches.

Decorative metal coatings of glass surfaces have been known for a long time. In their preparation process generally a paste is produced of metals or metal compounds, e.g. gold or silver and suitable additives, this paste is applied to the surfaces to be decorated using a suitable mask or screen-printing technology or it is applied by hand-printing, or by painting. Thereupon the pattern is baked. According to another method the metal is applied to the glass surfaces by a chemical reaction, e.g. by precipitation or it can be applied by evaporation in vacuo at high temperature.

The drawback of these methods is that the abrasion resistance and the resistance against different external effects (scratches, cleaning, etc.) of the metal coating is not sufficient for many fields of application, e.g. table tops, architectural glass, etc.

Further, with screen printing the size of the decorated surface is limited. The mesh size of screen puts a limit on the fine details of the pattern and the raster always remains visible.

It is also known that safety glass can be made by laminating one or more glass sheets onto each other, the mechanical strength of which considerably surpasses that of the single layer glass. The field of application determines the number and thickness of the layers. The layers are bonded together e.g. with a synthetic adhesive like acrylic esters or polyvinyl acetate, which are brought between the glass plates in a thin layer, e.g. in form of a film, and are bonded cold or by heating, optionally under pressure.

In US-A-2,878,357 there is described an electric heated laminated glass panel of non-parallelogramic shape in which a film of transparent, electrically conductive material is bonded between two glass sheets, wherein the film is in shaped sections each of which is provided with its own current input terminal. The primary use of the panel is for aircraft windshields; the purpose of the conductive film is not to provide a decorative or aesthetic effect but rather to provide electrical resistance heating for de-icing the panels.

US-A-1,961,335 discloses a manufacturing process for ornamental mirrors in which a design is impressed into a photosensitive material on a glass carrier. However, the design is not covered by or bonded to a covering layer of glass.

GB-A-410,026 is concerned with pocket mirrors in which a decorative pattern can be seen from the rear of the mirror.

The technology of making such mirrors exemplified in US-A-1,961,335 and GB-A-410,026 is unsuited to making the appreciably larger-sized articles of furniture or architectural glass with which the present invention is concerned, and which have to withstand far greater resistance to external effects.

The aim of our invention is to provide articles of furniture or architectural glass articles of decorative and aesthetic effect having a metal or metal compound coating of a desired pattern, the decoration of which has good resistance against various external effects, satisfies safety requirements, and combines these properties with applicability to any practical size and with a capability to reproduce finest details.

We have found that the above aims can be achieved by an article of furniture or architecture including a surface having a decorative, aesthetic pattern, wherein said surface forms part of a multilayer glass assembly which includes at least two glass sheets and a permanently visible, opaque, decorative, visible, pattern formed by deposition of a metal or a metal compound on one surface of at least one of said glass sheets, and wherein the surface having said pattern is juxtaposed to a surface of another glass sheet of the assembly and the surfaces are bonded to each other by a transparent or translucent adhesive layer.

In comparison with the known patterned glass sheets the decorated articles of furniture or architecture according to the invention have the advantage that the pattern is protected against various external mechanical and chemical effects, as well as climatic factors, the resulting product is easy and safe to clean, has high strength an an aesthetic appearance. Such products can be used indoors as outdoors and lend themselves to volume production as well as to simple and low-cost production methods. By proper choice of the pattern the glass article according to the invention, when used as a window or door pane, can be made to control the amount of light transmitted to and from a room.

The size of the glass sheets embodied in the invention can be varied as desired, the upper limit, if any, is represented by the lamination method used.

The patterned metal coating of the glass elements can be applied by any known method. Preferably the patterned metal coating is made by a combination of photo-masking and the metal deposition techniques used in making mirros.

The present invention further includes a process for preparing the article as set forth above, the process comprising the steps of:
- uniformly depositing an initial layer of a metal or metal compound on one surface of at least one of the glass sheets,
- coating the deposited metal compound layer with a radiation-sensitive layer,
- masking preselected portions of said radiation-sensitive layer according to a desired pattern,
- exposing to radiation the masked radiation-sensitive layer and thereby decomposing unmasked portions of said layer,
- removing the decomposed portions of said layer,
- removing portions of the initial layer of the metal or metal compound from which the decomposed layer has been removed,
- removing all remaining portions of the radiation-sensitive layer,
- laminating a further one of the glass sheets on the surface of the first glass sheet having the metal or metal compound on it.

For bonding the glass sheets of the article according to the invention together any known organic adhesive can be used, so e.g. acrylic esters and/or polyvinyl acetate the quality and thickness of which depend on the planned field of application as well as on the thickness of the patterned metal coating.

For special effects more patterned glass layers can be bonded to each other as described above and the upper layer covered by a transparent glass sheet containing no pattern.

The advantages of the two- or multilayer glass article according to the invention are that the pattern is not susceptible to mechanical harm, scratches and is more resistant to vandalism. Its strength is high owing to the two or more layers, and furthermore may be increased by varying the thickness and number of glass plates, considering the fields of the application where aesthetic appearance is important.

The glass elements according to the invention are disclosed in detail in the enclosed drawings which represent a few preferred, non-limiting embodiments of the invention.

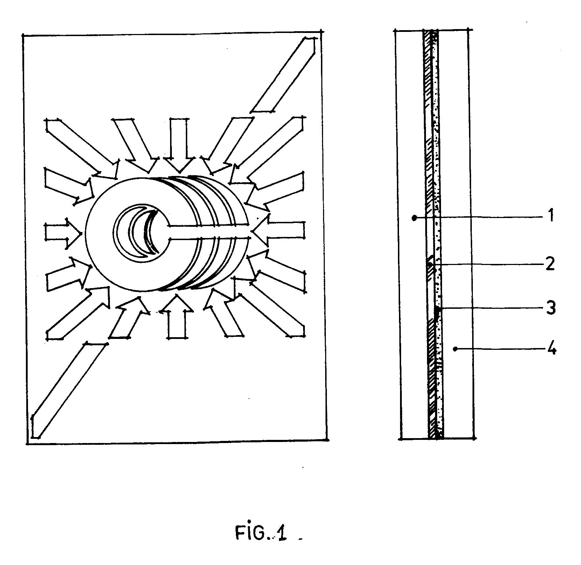

Fig. 1 shows the front and side view of an article according to the invention, suitable e.g. for carrying information texts and drawings. It shows a glass sheet 1 coated with patterned metal layer 2 bonded to a glass sheet 4 by an adhesive layer 3.

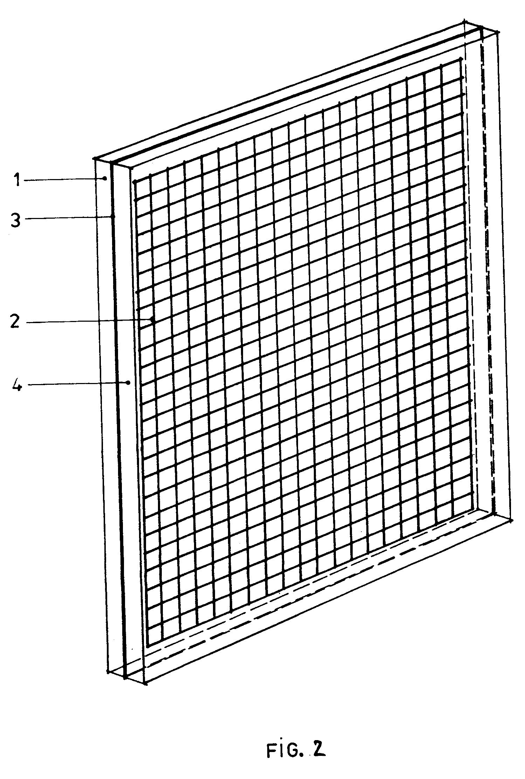

Fig. 2 shows an embodiment of the invention which can be used as window glass. Its pattern limits the volume of light transmitted, without distorting its spectrum. This fact is of high importance from a physiological point of view.

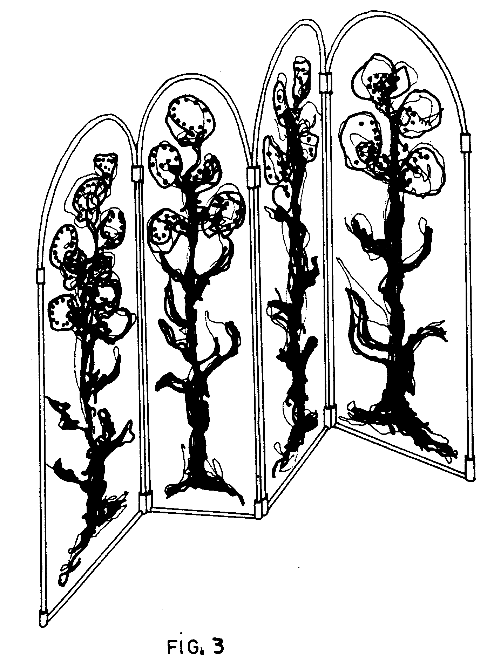

Fig. 3 shows a decorated folding screen wherein the patterned metal coating is of high aesthetic appearance as the process according to the invention enables the reproduction of a very details picture.

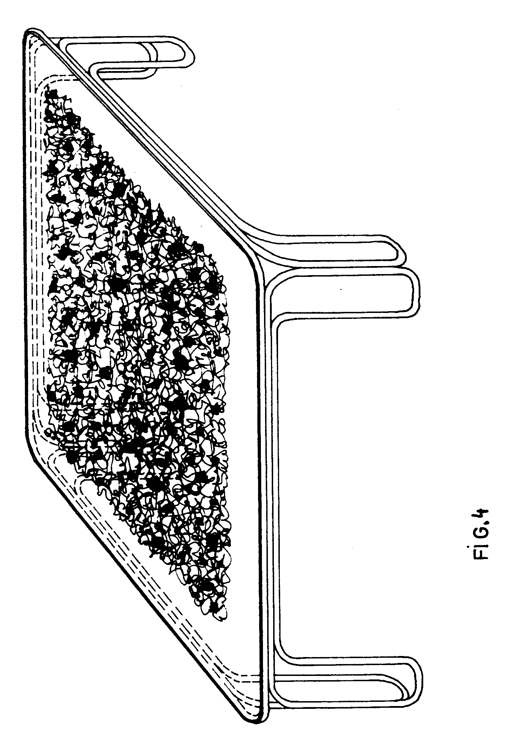

Fig. 4 shows a table constituting a product according to the invention. In this case not only the decorative appearance but the excellent strength of the glass element are utilized.

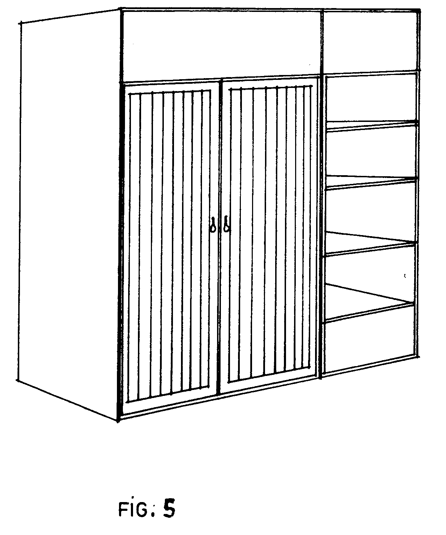

Fig. 5 shows a decorative glass element according to the invention used as a wardrobe door.

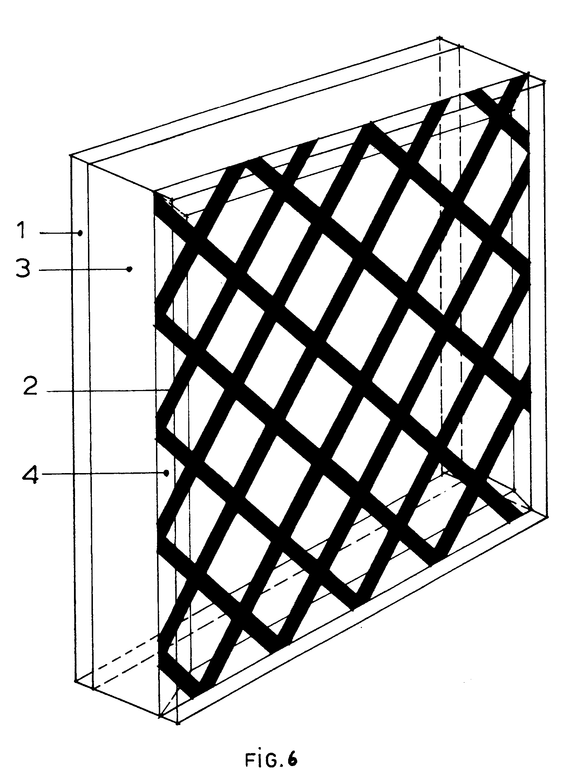

Fig. 6 shows the glass element according to the invention designed as sound proofing window pane, the pattern of which fits into the historical environment of an old city, without any loss in the excellent thermal and sound insulating properties of such products. For a window pane easy cleaning is also important.

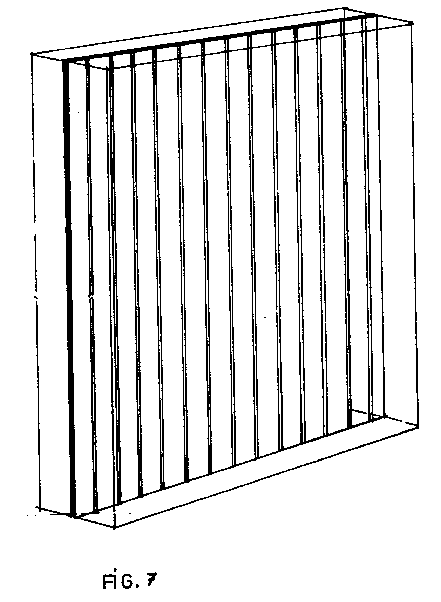

Fig. 7 shows an article according to the invention with Venetian mirror stripes, used as a shop window. Looking in is possible only to a limited extent, while looking out from the inside is not limited.

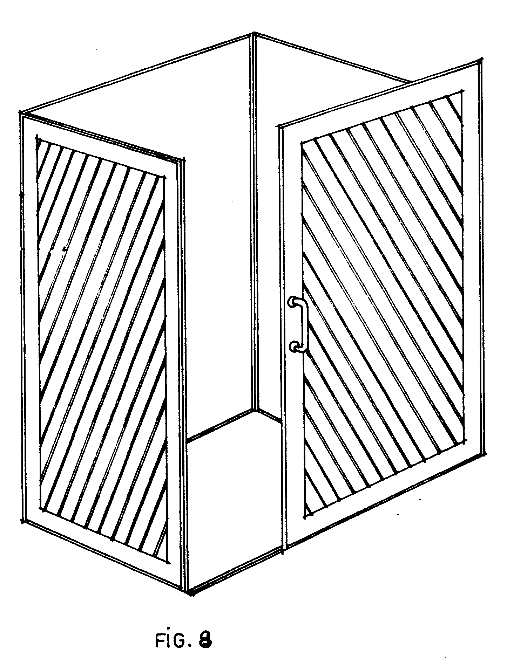

Fig. 8 shows a shower cubicle made up from the patterned glass articles according to the invention.

## Claims

1. An article of furniture or architecture including a surface having a decorative, aesthetic pattern, wherein said surface forms part of a multilayer glass assembly which includes at least two glass sheets (1) and a permanently visible, opaque, decorative, visible, pattern (2) formed by deposition of a metal or a metal compound on one surface of at least one of said glass sheets (1), and wherein the surface having said pattern (2) is juxtaposed to a surface of another glass sheet (4) of the assembly and the surfaces are bonded to each other by a transparent or translucent adhesive layer (3).

2. A process for preparing the article of claim 1, comprising the steps of:-
- uniformly depositing an initial layer of a metal or metal compound on one surface of at least one of the glass sheets,
- coating the deposited metal compound layer with a radiation-sensitive layer,
- masking preselected portions of said radiation-sensitive layer according to a desired pattern,
- exposing to radiation the masked radiation-sensitive layer and thereby decomposing unmasked portions of said layer,
- removing the decomposed portions of said layer,
- removing portions of the initial layer of the metal or metal compound from which the decomposed layer has been removed,
- removing all remaining portions of the radiation-sensitive layer,
- laminating a further one of the glass sheets on the surface of the first glass sheet having the metal or metal compound on it.

3. The process as claimed in claim 2, wherein a second layer of a metal or metal compound is deposited before laminating said further glass sheet.

4. The process as claimed in claim 2 or 3, wherein the layer of a metal or metal compound is applied to said surface of the glass sheet by chemical metallizing.

5. The process as claimed in claim 2 or 3, wherein the layer of a metal or metal compound is applied to said surface of the glass sheet by sputtering.

## Revendications

1. Article de mobilier ou d'architecture comprenant une surface ayant un motif décoratif et esthétique, dans lequel ladite surface fait partie d'un ensemble de verre multicouches qui comporte au moins deux feuilles de verre (1) et un motif (2) visible en permanence, opaque et décoratif formé par dépôt d'un métal ou d'un composé métallique sur une surface de l'une au moins desdites feuilles de verre (1), et dans lequel la surface ayant ledit motif (2) est juxtaposée à une surface d'une autre feuille de verre (4) de l'ensemble, et les surfaces sont liées l'une à l'autre ou les unes aux autres par une couche adhésive transparente ou translucide (3).

2. Procédé de préparation de l'article selon la revendication 1 comprenant les étapes suivantes :
- le dépôt uniforme d'une couche initiale de métal ou de composé métallique sur une surface de l'une au moins des feuilles de verre,
- le revêtement de la couche de métal ou de composé métallique déposée par une couche sensible au rayonnement,
- le masquage de parties pré-sélectionnées de la couche sensible au rayonnement selon un motif voulu,
- l'exposition au rayonnement de la couche sensible au rayonnement masquée, et ainsi la décomposition des parties non masquées de ladite couche,
- l'élimination des parties décomposées de ladite couche,
- l'élimination des parties de la couche initiale de métal ou de composé métallique de laquelle la couche décomposée a été enlevée,
- l'élimination de toutes les parties restantes de la couche sensible au rayonnement,
- la stratification d'une autre des feuilles de verre sur la surface de la première feuille de verre sur laquelle se trouve le métal ou le composé métallique.

3. Procédé selon la revendication 2 dans lequel une seconde couche d'un métal ou d'un composé métallique est déposée avant la stratification de ladite autre feuille de verre.

4. Procédé selon la revendication 2 ou 3 dans lequel la couche de métal ou de composé métallique est appliquée sur ladite surface de ladite feuille de verre par métallisation chimique.

5. Procédé selon la revendication 2 ou 3 dans lequel la couche de métal ou de composé métallique est appliquée sur ladite surface de la feuille de verre par dispersion.

## Patentansprüche

1. Einrichtungsgegenstand oder Gebäudeelement, das eine Fläche mit einem dekorativen, ästhetischen Muster umfaßt, bei dem die Fläche ein Teil eines mehrschichtigen Glasbauteils bildet, das mindestens zwei Glasplatten (1) und ein bleibend sichtbares, undurchsichtiges, dekoratives, sichtbares Muster (2) umfaßt, das durch Aufbringen eines Metalls oder einer Metallverbindung auf eine Fläche mindestens einer der Glasplatten (1) gebildet ist, und bei dem die Fläche mit dem Muster (2) an die eine Fläche der anderen Glasplatte (4) des Bauteils angeordnet ist, und die Flächen durch eine transparente oder lichtdurchlässige Klebeschicht (3) miteinander verbunden sind.

2. Verfahren zur Herstellung des Gegenstands nach Anspruch 1, der die folgenden Verfahrensschritte aufweist:
- gleichmäßiges Aufbringen einer Ausgangsschicht eines Metalls oder einer Metallverbindung auf eine Fläche mindestens einer der Glasplatten,
- Beschichten der aufgebrachten Metallverbindungsschicht mit einer strahlungsempfindlichen Schicht,
- Abdecken von ausgesuchten Teilen der strahlungsempfindlichen Schicht gemäß einem gewünschten Muster,
- Aussetzen der abgedeckten strahlungsempfindlichen Schicht einer Strahlung und dadurch Zerlegen der nicht abgedeckten Teile der Schicht,
- Entfernen der zerlegten Teile der Schicht,
- Entfernen der Teile der Ausgangsschicht des Metalls oder der Metallverbindung, von der die zerlegte Schicht entfernt wurde,
- Entfernen aller verbleibenden Teile der strahlungsempfindlichen Schicht,
- Verbinden einer weiteren Glasplatte mit der Fläche der ersten Glasplatte, die das Metall oder die Metallverbindung auf ihr hat.

3. Verfahren nach Anspruch 2, bei dem eine zweite Schicht eines Metalls oder einer Metallverbindung vor dem Verbinden mit der weiteren Glasplatte aufgebracht wird.

4. Verfahren nach nach Anspruch 2 oder 3, bei dem die Schicht eines Metalls oder einer Metallverbindung durch chemisches Metallbedampfen auf die Fläche der Glasplatte aufgebracht wird.

5. Verfahren nach Anspruch 2 oder 3, bei dem die Schicht eines Metalls oder einer Metallverbindung auf die Flächen der Glasplatte durch Zerstäuben aufgebracht wird.
